# EUROPEAN PATENT SPECIFICATION

(11) **EP 0 713 016 B1**
(45) Date of publication and mention of the grant of the patent: **29.05.2002**
(21) Application number: 95203159.9
(22) Date of filing: 17.11.1995
(51) Int. Cl.: F16B 21/02, A45F 5/02, H04B 1/38

(54) **Coupling device**
Kupplungsvorrichtung
Dispositif d'accouplement

(30) Priority: 17.11.1994 NL 9401924; 08.02.1995 NL 9500234
(43) Date of publication of application: 22.05.1996
(73) Proprietor: Lederverwerkende Industrie De Buffel B.V., 4844 RG Terheijden (NL)
(72) Inventor: van Wijk, Paulus Lambertus, NL-4844 VR Terheijden (NL)
(74) Representative: 't Jong, Bastiaan Jacob

(56) References cited:
- EP-A- 0 568 921
- WO-A-92/04548
- DE-U- 9 417 826
- GB-A- 1 187 430
- US-A- 3 743 147
- US-A- 4 605 335

## Description

The present invention relates to a coupling substantially comprising a male coupling part which is formed by a base with a protrusion and hereon a coupling piece extending above the base and a female coupling part with a recess in which a passage for the coupling piece is defined by at least one flange.

In a coupling known from US-A-3,743,147 the coupling piece has a specific shape, where this can be inserted into or retrieved from the female coupling part in just a single rotational position relative thereto. After insertion the male coupling part and the female coupling part are rotatable relative to one another and remain coupled in any other position than the one mentioned.

The known coupling has for a disadvantage, that rotation of the male coupling part and the female coupling relative to one necessarily involves lateral play between the male and female coupling parts along the rotational path. In this the coupling can get stuck, while rotating the male coupling part and the female coupling part relative to one another. Another problem common to both prior art couplings according to US-A-3,743,147 is lateral play or latitude of movement in a direction perpendicular to the rotation axis in the aforementioned single rotational relative position for insertion or withdrawal. Thus, having rotated to the relative rotational position required for insertion and uncoupling, the lateral positioning may then still be incorrect. As a result thereof especially uncoupling can be hindered, because of the coupling piece engaging the at least one flange in the incorrect lateral positioning of the male and female coupling parts. The known coupling is therefore uneasy to use and handling thereof, especially uncoupling, is hampered.

The present invention is directed at solving the above mentioned problem, and therefore according to claim 1 a coupling is provided which differs from that prior art in that in a coupled state of the coupling any other relative movement than rotation is prevented. According to the first option of claim 1, the protrusion is entirely cylindrical. By providing the male coupling part and the female coupling part with the described features, a bearing ensures fluidly rotational movement in the coupling, as well as a single, well-defined mutual relative position of the male coupling part and the female coupling part for both engagement and disengagement, where especially the relative mutual position for disengagement is automatically achieved by rotation only.

The invention will be further elucidated with reference to the figure description of a number of embodiments of the invention following hereinbelow. In the drawing:
figure 1 shows an illustration of an application of a coupling according to the present invention;
figure 2 shows a perspective view of coupling parts of a coupling according to the present invention;
figure 3 shows a sectional view of the coupling parts shown in figure 2 in coupled situation;
figure 4 shows a second embodiment of the coupling according to the invention; and
figure 5 shows a third embodiment of the coupling according to the present invention.

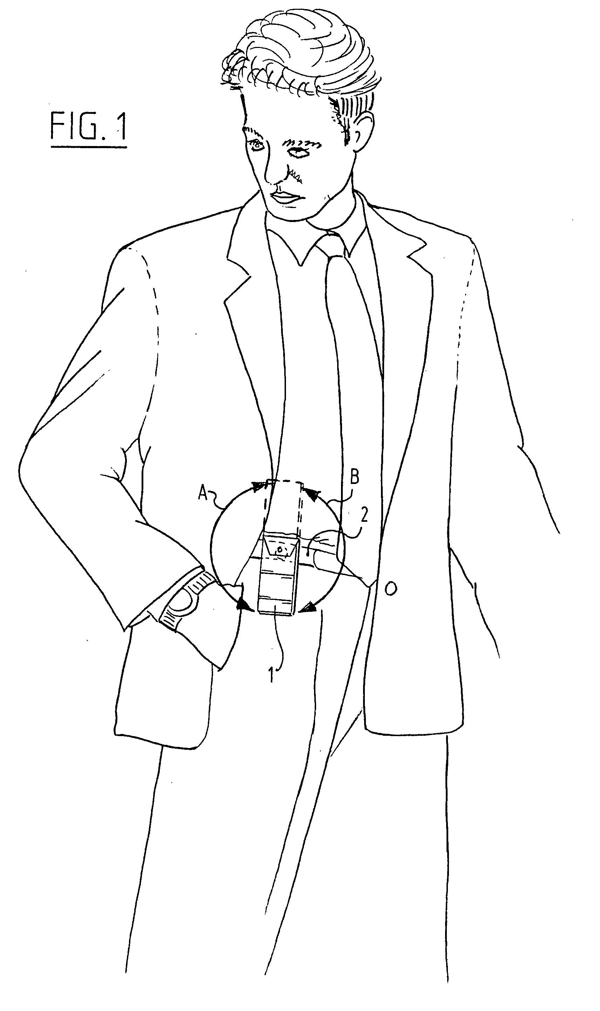

In figure 1 is shown an application of a coupling according to the present invention, wherein a holder 1 for a telecommunications apparatus for example, such as a portable telephone or a semaphone, is coupled to a belt 2 of the user thereof by means of a coupling according to the present invention.

A male coupling part fixed to the holder 1 is placed into a female coupling part fastened to the belt 2, when the holder is situated in the position indicated by dashed lines. The holder 1 is then turned on the rotation axis defined by the coupling to the position shown in the figure with full lines. In this latter position the holder can move freely in the directions indicated by the arrows A and B, wherein there is no danger of the holder 1 being released from the belt 2. The holder 1 can only be released from the belt 2 when holder 1 is again turned to the position shown by means of the dashed lines.

Since in this embodiment of the coupling the holder 1 can swing freely in the directions indicated by means of the arrows A and B, the wearer of the holder 1 will experience very little hindrance from the holder 1 when for example he is walking or sits down.

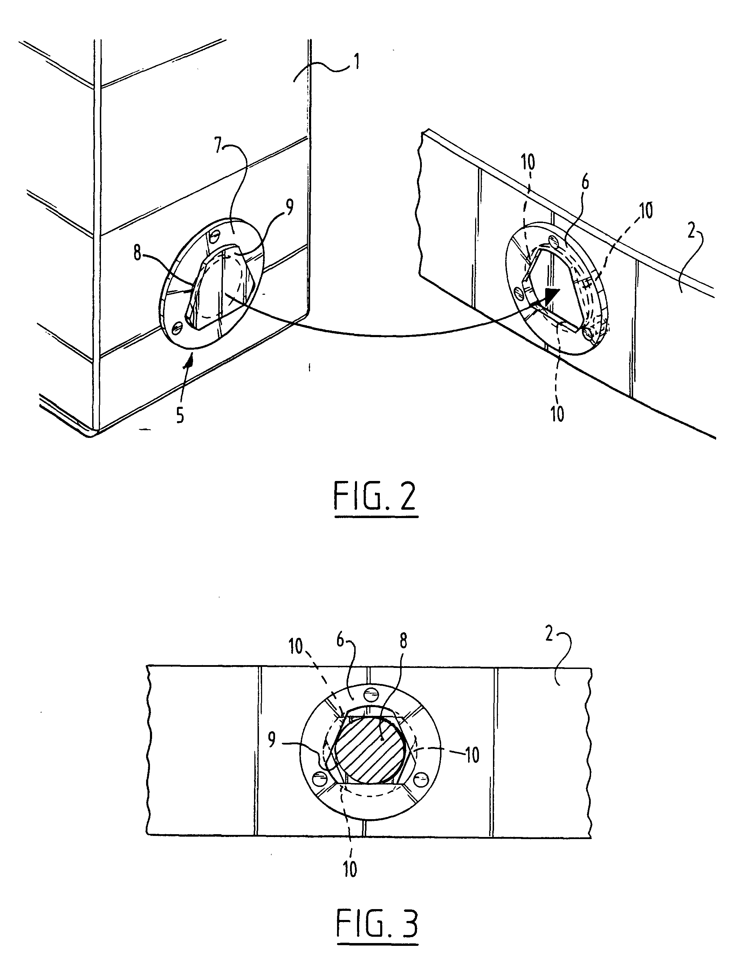

The coupling shown in figure 2 comprises: a male coupling part 5 with a base in the form of a disc 7, a cylindrical protrusion 8 and a coupling piece in the form of hexagonal plate 9; and a female coupling part in the form of a flat ring 6, wherein flanges 10 are arranged on the inside of the flat ring 6.

The shape of the passage defined by the flanges 10 in the inside of the flat ring 6 corresponds closely with the outer periphery of the hexagonal plate 9. The shape of the hexagonal plate 9 corresponds with that of a scalene triangle, the inscribed circle of which coincides with the outer periphery of the cylindrical protrusion 8, and the points of which are cut off along a circle concentric with the cylindrical protrusion. The periphery of this circle corresponds with the inner wall of the flat ring 6. It is noted here that a scalene triangle, and also a scalene triangle of which parts have been cut off in this manner, does not have an axis of symmetry perpendicular to the rotation axis.

When the hexagonal plate 9 of the male coupling part 5 is therefore placed into the flat ring 6, the parts of the periphery of the hexagonal plate 9 corresponding with the cut-off parts of the scalene triangle connect to the inside wall of the flat ring 6 and the cylindrical protrusion 8 is enclosed on three sides by the flanges 10.

The rotation axis around which the male coupling part 5 is rotatable in the flat ring 6 coincides in this configuration of the coupling with the central axis of the cylindrical protrusion 8 and with the middle of the disc 7. When the hexagonal plate 9 of the male coupling part 5 is therefore placed through the passage in the flat ring 6 defined by the flanges 10 and the male coupling part 5 is rotated, the disc 7 and the flat ring 6 will only rotate relative to each other, wherein no other relative movement takes place.

The holder 1 is then rotated a half turn through the coupling, whereafter the holder 1 hangs on the belt 2 by means of the coupling.

This situation is shown in figure 3, which figure shows a section of the coupling in a coupled situation taken along the surface of the flat ring 6 facing toward the male coupling part 5. It is apparent that the male coupling part 5 can only be placed into the female coupling part in the form of flat ring 6 in one relative position, and that release can also only be effected in this same relative position.

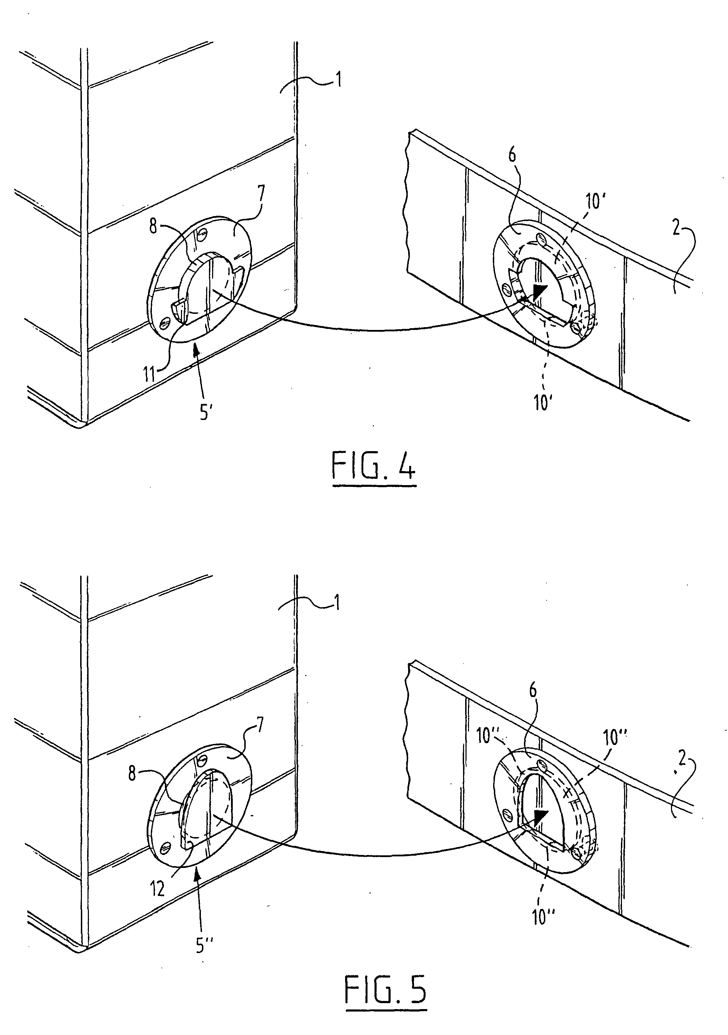

Figure 4 is a view corresponding with figure 2 of another embodiment of a coupling according to the present invention. The coupling shown differs from that shown in figure 2 in the shape of the coupling piece 11 and the shape of the flanges 10 corresponding therewith.

The coupling piece has the form of a disc which corresponds with the cylindrical protrusion 8 and to which are fixed two flanges with a curvature corresponding with the inside wall of the flat ring 6, wherein the coupling piece 11 is symmetrical relative to a vertical axis of symmetry in the representation shown in the figure, which intersects the axis of rotation. The coupling piece has no other axis of symmetry. Once again the male coupling part 5 can therefore only be placed into the flat ring 6 in one relative position, and release can only be effected in this same relative position.

A third embodiment of a coupling according to the present invention is shown in figure 5. The shape of the coupling piece 12 in this embodiment is that of a semi-ellipse obtained by cutting along a line perpendicular to the lengthwise axis, wherein the circle inscribed in this semi-ellipse corresponds with the periphery cylindrical protrusion 8. It is here also the case that the form of the coupling piece 12 only has one axis of symmetry intersecting and perpendicular to the axis of rotation, whereby coupling and release of the coupling can only take place in one relative position of the male coupling part 5 relative to the flat ring 6.

In a preferred embodiment of the invention the coupling is provided with locking means, such as a cavity placed in accordance with a desired locking position in the surface of the base directed toward the female coupling part and a bulge corresponding therewith on the surface of the female coupling part directed toward the male coupling part, or vice versa.

In the above described embodiments of couplings according to the present invention both the male coupling part and the female coupling part are formed in each case by flat components. In other embodiments of the invention it is however possible that the base of the male coupling part is convex and the female coupling part has a concave shape corresponding therewith, or vice versa. It is also possible for the coupling piece to have other than a plate shape, such as a part of a sphere. If the side of the female coupling part facing away from the base of the male coupling part is covered with a cover plate, the cover plate in this latter case must have a concave form.

In another embodiment of a coupling according to the present invention the parts of the coupling piece extending above the base of the male coupling part are directed toward the base.

In yet another embodiment of a coupling according to the present invention the protrusion has a shape other than cylindrical. The invention also comprises shapes whereof the central axis lies at a distance relative to the rotation axis around which the male coupling part rotates in the female coupling part in the coupled situation.

In an embodiment of the invention the coupling piece is preferably formed such that in any position other than the insertion position it hooks behind flanges to such a degree that tilting of the male coupling part in and relative to the female coupling part is prevented.

## Claims

1. Coupling, comprising:
- a male coupling part (5, 5', 5") which is formed by a base (7) with a protrusion (8) and hereon a coupling piece (9, 11, 12) extending above the base (7); and
- a female coupling part (6) with a recess towards which a passage for the coupling piece (9, 11, 12) is defined by at least one flange (10, 10', 10"),
wherein in coupled situation the male coupling part (5, 5', 5") is inserted in the female coupling part (6) for rotation on a rotation axis of the male coupling part such that the or more than one flange (10, 10', 10") is at least partially arranged between the base (7) and the coupling piece (9, 11, 12), where the peripheral shape of the coupling piece (9, 11, 12) is symmetrical relative to a maximum of one axis of symmetry intersecting the rotation axis, whereby
- the protrusion (8) is entirely cylindrical and co-axial with the rotation axis, the diameter thereof corresponding with the size of an inscribed circle in the passage and/or
- the inner peripheral wall of the recess is circular in cross section perpendicular to the rotation axis and co-axial with the rotation axis, the diameter thereof corresponding with a circumscribed circle of the coupling piece (9, 11, 12),
the female coupling part (6) forming a bearing for the male coupling part (5, 5', 5") in a coupled state of the coupling preventing any other relative movement than rotation.

2. Coupling according to claim 1, **characterized in that** the protrusion (8) is substantially covered by the coupling piece.

3. Coupling according to claim 1 or 2, **characterized in that** the periphery of the coupling piece (9, 11, 12) is substantially formed by a triangle with unequal sides.

4. Coupling according to any of the foregoing claims, **characterized in that** at least a part of the periphery of the coupling piece (9, 11, 12) is formed by cutting off the parts lying outside the shape corresponding with the inner circle of the recess.

5. Coupling according to any of the foregoing claims, **characterized by** locking means for blocking the rotation in at least one position of the male coupling part (5, 5', 5") relative to the female locking part (6).

## Patentansprüche

1. Kupplung, mit:
- einem Kupplungsstecker (5, 5', 5"), der aus einer Grundplatte (7) mit einer Hervorhebung (8) und einem darauf angeordneten Kupplungsteil (9, 11, 12) besteht, das über die Grundplatte (7) ragt,
- und einer Kupplungsaufnahme (6) mit einer Aussparung, durch die ein Durchlass für das Kupplungsteil (9, 11, 12) durch mindestens einen Flansch (10, 10', 10") gebildet ist,
worin im gekuppelten Zustand der Kupplungsstecker in die Kupplungsaufnahme für eine Drehung auf einer Drehachse des Kupplungssteckers so eingesetzt ist, dass der eine, oder mehr als der eine Flansch (10, 10', 10"), wenigstens teilweise zwischen der Grundplatte (7} und dem Kupplungsteil (9, 11, 12) angeordnet ist, wo die Umfangsform des Kupplungsteils (9, 11, 12) relativ zu einem Maximum einer die Drehachse schneidenden Symmetrieachse symmetrisch ist, wobei
- die Hervorhebung (8) vollständig zylindrisch und koaxial zur Drehachse angeordnet ist, mit einem Durchmesser der dem dem Durchlass einbeschriebenen Kreises entspricht, und/oder
- die Innenummfangswand der Aussparung, im Querschnitt senkrecht zu der Drehachse und koaxial zur Drehachse kreisförmig ist, mit einem Durchmesser der dem eines das Kopplungsteil (9, 11, 12) umschreibenden Kreises entspricht, wobei die Kupplungsaufnahme (6) ein Lager für den Kupplungsstecker (5, 5', 5") im gekuppelten Zustand bildet und jegliche andere relative Bewegung außer einer Drehung verhindert.

2. Kupplung, nach Anspruch 1,
**dadurch gekennzeichnet,**
**dass** die Hervorhebung (8) im Wesentlichen von dem Kupplungsteil überdeckt wird.

3. Kupplung, nach Anspruch 1 oder 2,
**dadurch gekennzeichnet,**
**dass** der Umfang des Kopplungsteils (9, 11, 12) im Wesentlichen von einem ungleichseitigen Dreieck gebildet wird.

4. Kupplung, nach einem der vorherigen Ansprüche,
**dadurch gekennzeichnet,**
**dass** mindestens ein Teil des Umfangs des Kopplungsteils (9, 11, 12), durch Ausschneiden der Teile, die sich außerhalb der dem inneren Kreis der Aussparung entsprechenden Form befinden, gebildet wird.

5. Kupplung, nach einem der vorherigen Ansprüche,
**gekennzeichnet durch**
eine Verriegelungsvorrichtung zum Blockieren der Drehung des Kupplungssteckers relativ zur Kupplungsaufnahme (6) in zumindest einer Position.

## Revendications

1. Dispositif d'assemblage, comprenant :
- une partie mâle de fixation (5, 5', 5"), qui est constituée par une base (7) présentant une protubérance (8) avec, sur celle-ci, un élément d'accouplement (9, 11, 12) qui s'étend au-dessus de la base (7) ; et
- une partie femelle de fixation (6) comportant une cavité, en direction de laquelle un passage, prévu pour l'élément d'accouplement (9, 11, 12), est défini par au moins un rebord (10, 10', 10"),
dans lequel, à l'état assemblé, la partie mâle de fixation (5, 5', 5") est insérée dans la partie femelle de fixation (6) pour une rotation autour d'un axe de rotation de la partie mâle de fixation, de telle sorte que le ou lesdits rebord(s) (10, 10', 10") soit ou soient du moins en partie disposé(s) entre la base (7) et l'élément d'accouplement (9, 11, 12), lorsque la forme périphérique de l'élément d'accouplement (9, 11, 12) est symétrique par rapport à un maximum d'un axe de symétrie coupant l'axe de rotation, et dans lequel
- la protubérance (8) est complètement cylindrique et coaxiale par rapport à l'axe de rotation, et son diamètre correspondant à la taille d'un cercle inscrit dans le passage, et/ou
- la paroi périphérique interne de la cavité a une section transversale de forme circulaire, perpendiculairement à l'axe de rotation, et est coaxiale par rapport à l'axe de rotation, son diamètre correspondant à un cercle circonscrit à l'élément d'accouplement (9, 11, 12),
la partie femelle de fixation (6) formant un soutien pour la partie mâle de fixation (5, 5', 5"), à l'état assemblé du dispositif d'assemblage, empêchant tout mouvement relatif autre qu'une rotation.

2. Dispositif d'assemblage selon la revendication 1, **caractérisé en ce que** la protubérance (8) est sensiblement recouverte par l'élément d'accouplement.

3. Dispositif d'assemblage selon la revendication 1 ou 2, **caractérisé en ce que** la périphérie de l'élément d'accouplement (9, 11, 12) se présente sensiblement sous la forme d'un triangle à côtés inégaux.

4. Dispositif d'assemblage selon l'une quelconque des revendications précédentes, **caractérisé en ce qu'**au moins une partie de la périphérie de l'élément d'accouplement (9, 11, 12) est formée par sectionnement des zones dépassant de la forme correspondant au cercle intérieur de la cavité.

5. Dispositif d'assemblage selon l'une quelconque des revendications précédentes, **caractérisé par** des moyens de verrouillage servant à bloquer la rotation en au moins une position de la partie mâle de fixation (5, 5', 5") par rapport à la partie femelle de fixation (6).
